# EUROPÄISCHE PATENTSCHRIFT

(11) **EP 3 213 833 B1**
(45) Veröffentlichungstag und Bekanntmachung des Hinweises auf die Patenterteilung: **06.04.2022**
(21) Anmeldenummer: 17000201.8
(22) Anmeldetag: 09.02.2017
(51) Int. Cl.: B21D 24/00, B21D 55/00, B21D 43/02, B30B 15/28

(54) **VORRICHTUNG MIT PRESSE, WERKZEUG UND WERKZEUGSCHUTZSYSTEM ZUR BEARBEITUNG VON BLECHWERKSTÜCKEN**
DEVICE WITH PRESS, TOOL AND TOOL PROTECTION SYSTEM FOR PROCESSING SHEET METAL WORKPIECES
DISPOSITIF COMPRENANT UNE PRESSE, UN OUTIL ET UN SYSTÈME DE PROTECTION D'OUTIL DESTINÉ À TRAVAILLER DES PIÈCES EN TÔLE

(30) Priorität: 05.03.2016 DE 102016002765
(43) Veröffentlichungstag der Anmeldung: 06.09.2017
(73) Patentinhaber: Audi AG, 85045 Ingolstadt (DE)
(72) Erfinder: Krönauer, Benedikt, DE - 85283 Wolnzach (DE); Canti, Robert, DE - 80939 München (DE); Zeller, Erik, DE - 85055 Ingolstadt (DE); Schaller, Ludwig, DE - 85051 Ingolstadt (DE)
(74) Vertreter: Eickmeyer, Dietmar

(56) Entgegenhaltungen:
- DE-A1- 10 039 266
- DE-A1-102006 031 438
- DE-B1- 2 462 639
- FR-A1- 3 008 010
- JP-A- H11 216 527

## Beschreibung

Die Erfindung betrifft eine Vorrichtung zur Bearbeitung von Blechwerkstücken, mit einer Presse und wenigstens einem darin eingebauten Pressenwerkzeug, gemäß Oberbegriff des Patenanspruchs 1.

Eine Vorrichtung betreffender Art (nächstliegender Stand der Technik) ist aus der DE 10 2006 031 438 A1 derselben Anmelderin bekannt. Die Presse der vorbekannten Vorrichtung weist einen Kurbeltrieb auf (Kurbelpresse), mit dem der Pressenstößel zusammen mit dem daran befestigten Werkzeugoberteil bis zu einem tiefsten Punkt und dann wieder nach oben bewegt wird, wobei ein zwischen Werkzeugunterteil und Werkzeugoberteil befindliches Blechwerkstück umgeformt wird. Befindet sich zwischen den Werkzeugteilen kein Blechwerkstück (sogenannter Leerhub) können sich die Werkzeugteile berühren, wodurch es zu Beschädigungen am Werkzeug und insbesondere an den Werkzeugwirkflächen kommen kann. (Selbiges gilt prinzipiell auch für Pressen mit hydraulischen Antrieben.) Die am Niederhalter angeordneten Distanzelemente haben lediglich die Funktion, durch Veränderung der Flanschflächenpressung den Umformprozess zu beeinflussen. Eine gefährliche Kollision der Werkzeugteile beim Leerhub kann damit aber nicht verhindert werden.

Zum Stand der Technik wird ferner hingewiesen auf die JP H11 216527 A, welche einen Abstandshalter für den Niederhalter eines Blechumformwerkzeugs beschreibt.

Zum Stand der Technik wird außerdem hingewiesen auf die DE 24 62 639 B1, welche eine Sicherheitszapfenanordnung für eine Blechziehpresse beschreibt.

Mit der Erfindung soll für den mit dem Stand der Technik einhergehenden Nachteil (wie oben erläutert) Abhilfe geschaffen werden.

Dies gelingt mit einer erfindungsgemäßen Vorrichtung entsprechend den Merkmalen des Patentanspruchs 1. Bevorzugte Weiterbildungen und Ausgestaltungen der Erfindung ergeben sich aus den abhängigen Patentansprüchen, der nachfolgenden Beschreibung und den Figuren.

Die erfindungsgemäße Vorrichtung zur Bearbeitung von Blechwerkstücken umfasst:
- wenigstens ein Pressenwerkzeug, das ein Werkzeugunterteil und ein Werkzeugoberteil aufweist;
- eine Presse, die einen Pressentisch, auf dem das Werkzeugunterteil angeordnet ist, und einen Pressenstößel, an dem das Werkzeugoberteil befestigt ist, aufweist, wobei durch Absenken und Anheben des Pressenstößels eine Relativbewegung zwischen den Werkzeugteilen ermöglicht wird; und
- ein aktives (Werkzeug)Schutzsystem für das Pressenwerkzeug, das einen Leerhub (d. h. einen Schließhub ohne Blechwerkstück) erkennt und dann mithilfe wenigstens einer aktiv einstellbaren Distanzeinrichtung eine Kollision zwischen Werkzeugoberteil und Werkzeugunterteil verhindert.

Bei dem Pressenwerkzeug handelt es sich insbesondere um ein Umform- und/oder Schneidwerkzeug. Leerhübe können bspw. durch Fehler im regulären Pressenbetrieb, beim Coil- bzw. Platinenstapelwechsel oder im Einrichtbetrieb auftreten. Das zur erfindungsgemäßen Vorrichtung gehörende Schutzsystem erkennt Leerhübe und verhindert eine Kollision der Werkzeugteile am tiefsten Punkt der Schließbewegung (UT), so dass Beschädigungen an den Werkzeugwirkflächen (insbesondere sind dies eine Matrizenfläche und eine Stempelfläche), vor allem an kritischen Wirkflächenkanten, unmöglich sind. Die Kollision der Werkzeugwirkflächen wird durch mechanisches Beabstanden der Werkzeugteile bzw. -hälften mithilfe wenigstens einer aktiv einstellbaren Distanzeinrichtung verhindert. Die Distanzeinrichtung kann insofern auch als Beabstandungseinrichtung bezeichnet werden. Eine Kollision des Niederhalters kann mit den aus dem Stand der Technik bekannten Distanzelementen verhindert werden, was ausdrücklich nicht Gegenstand der Erfindung ist.

Die (aktiv einstellbare) Distanzeinrichtung kann am Werkzeugoberteil und/oder am Werkzeugunterteil angeordnet sein und ist hierzu insbesondere an einer starren (nicht relativbeweglichen) Werkzeughauptkomponente (hierzu zählt nicht der Niederhalter bzw. Blechhalter) angebracht. Die Distanzeinrichtung kann aber auch am Pressentisch und/oder Pressenstößel angeordnet sein. Je nach Anordnung kann die Distanzeinrichtung bspw. zwischen Werkzeugoberteil und Werkzeugunterteil, zwischen Pressentisch und Werkzeugoberteil, zwischen Werkzeugunterteil und Pressenstößel oder zwischen Pressentisch und Pressenstößel wirksam sein.

Das Pressenwerkzeug und/oder die Presse kann wenigstens einen Sensor aufweisen, der das Vorhandensein eines Blechwerkstücks erfasst. Ein solcher Sensor stellt also die Information bereit, ob sich beim aktuellen Schließ- bzw. Arbeitshub ein Blechwerkstück im Pressenwerkzeug befindet. Eine solche Information kann auch von der Pressensteuerung (bspw. durch Abfrage von Initiatoren), einer vorausgehenden Arbeitsstation, einem Transfer- bzw. Handlingssystem etc. bereitgestellt werden.

Die erfindungsgemäße Vorrichtung kann eine zum Schutzsystem gehörende Steuereinrichtung aufweisen, mit der die Distanzeinrichtung abhängig vom Vorhandensein oder Fehlen eines Blechwerkstücks im Pressenwerkzeug gesteuert werden kann. Die Steuerung kann bspw. das Ein- oder Ausfahren eines Stellelements umfassen. Die Steuerung kann aber auch das Einstellen einer bestimmten Distanz durch teilweises Ein- oder Ausfahren des Stellelements (s. u.) umfassen. Die Steuereinrichtung ist bspw. mit einem im Pressenwerkzeug verbauten Sensor (s. o.), der Pressensteuerung, der Anlagensteuerung und/oder dergleichen verbunden und verarbeitet die erhaltenen Informationen bspw. mithilfe eines Softwarealgorithmus. Bevorzugt erfolgt das gegebenenfalls erforderliche Verstellen der Distanzeinrichtung lastfrei zwischen den Arbeitshüben. Sind mehrere Distanzeinrichtungen vorhanden, können diese synchron oder auch unterschiedlich gesteuert und verstellt werden.

Während der Einarbeitung eines Pressenwerkzeugs, insbesondere eines Umformwerkzeugs, kann der im unteren Bewegungstotpunkt (UT) gegebene Abstand zwischen den Werkzeugteilen bzw. Werkzeugwirkflächen zur Sicherstellung der Bauteilqualität mithilfe sogenannter Werkzeugdistanzen eingestellt werden. Diese starren Werkzeugdistanzen sind bspw. außen am Pressenwerkzeug angeordnet und bleiben unverändert. Während eines Arbeitshubs werden dann allerdings bis zu 40 % und mehr der Pressenkraft über diese Werkzeugdistanzen abgeleitet. Die Erfindung bietet nun als Weiterbildung die Möglichkeit, dass anstatt konventioneller starrer Werkzeugdistanzen mehrere aktiv einstellbare Distanzeinrichtungen umfasst sind, die einerseits bei einem Leerhub die Kollision zwischen Werkzeugoberteil und Werkzeugunterteil verhindern und andererseits bei einem regulären Arbeitshub (mit Blechwerkstück) als Werkzeugdistanzen fungieren können. Bevorzugt weisen die Distanzeinrichtungen aus- und einfahrbare Stellelemente auf (s. o.). Dadurch besteht die Möglichkeit, dass diese Stellelemente nur bei Bedarf ganz oder teilweise (zur Herbeiführung einer bestimmten Distanz) ausgefahren werden und ansonsten eingefahren sind, so dass sich die Distanzeinrichtungen nicht im Kraftfluss bzw. Kraftübertragungspfad befinden und somit die Pressenkraft um bis zu 40 % und mehr reduziert werden kann. Die aktiv einstellbaren Distanzeinrichtungen können also bei Bedarf und entsprechender Ausgestaltung die Funktion von Werkzeugdistanzen zur Gewährleistung eines die Bauteilqualität sichernden und einstellbaren Abstands zwischen den Werkzeugteilen bzw. -hälften übernehmen. Die Steuerung dieser einstellbaren Distanzeinrichtungen kann mithilfe der Steuereinrichtung erfolgen.

Bevorzugt umfasst die aktiv einstellbare Distanzeinrichtung:
- ein Stellelement bzw. Druckstück, das aus- und einfahrbar ist, wobei dieses Stellelement zumindest eine ausgefahrene und eine eingefahrene Stellung und bevorzugt jede beliebige Zwischenstellung bzw. -position definiert einnehmen kann;
- wenigstens ein Federelement, das das Stellelement in Ausfahrrichtung bzw. in die ausgefahrene Stellung vorspannt;
- wenigstens ein Antriebselement, das, insbesondere mittels Antriebsmechanismus, das Stellelement gegen die vom Federelement erzeugte Federkraft bewegen bzw. verfahren kann.

Die aktiv einstellbare Distanz- bzw. Beabstandungseinrichtung zeichnet sich dadurch aus, dass das die Beabstandung zwischen den Werkzeugteilen herbeiführende Stellelement bzw. Druckstück in die ausgefahrene Stellung hinein vorgespannt ist, wodurch die Werkzeugteile des Pressenwerkzeugs im Falle eines Energieverlusts (bspw. bei Ausfall einer elektrischen oder pneumatischen Versorgung) automatisch kollisionsgeschützt sind. Mithilfe des Antriebselements kann das Stellelement entgegen der Vorspannung ganz oder gegebenenfalls auch nur teilweise eingefahren werden.

Die aktiv einstellbare Distanzeinrichtung weist bevorzugt einen (im Kraftfluss bzw. Kraftübertragungspfad) zwischen Antriebselement und Stellelement angeordneten Antriebsmechanismus auf, wobei dieser Antriebsmechanismus bevorzugt mit einer selbsthemmenden Funktion ausgestattet ist, die das Eindrücken des ausgefahrenen Stellelements verhindert. Bevorzugt umfasst der Antriebsmechanismus wenigstens einen Keilschieber. Mithilfe eines solchen Keilschiebermechanismus können eine Kraft- und Bewegungsübersetzung, eine Richtungsänderung und/oder eine Selbsthemmung bewerkstelligt werden.

Die aktiv einstellbare Distanzeinrichtung kann wenigstens einen Kraftmesssensor zur Kraftmessung aufweisen. Die Kraftmessung dient insbesondere dazu, die im Leerhub und gegebenenfalls auch im Arbeitshub auf das Stellelement bzw. Druckstück einwirkende und somit von der Distanzeinrichtung übertragene Kraft zu erfassen. Die erfasste Kraft kann zur Überwachung und gegebenenfalls auch zur Nachstellung oder auch Regelung der Stellelementposition verwendet werden. Die aktiv einstellbare Distanzeinrichtung kann außerdem auch wenigstens einen Sensor (Positionsgeber) zur Erfassung der Keilschieber- und/oder Stellelementposition aufweisen.

Die Erfindung wird nachfolgend anhand der Figuren beispielhaft und in nicht einschränkender Weise näher erläutert.
- Fig. 1: zeigt schematisch eine erfindungsgemäße Vorrichtung zur Bearbeitung von Blechwerkstücken.
- Fig. 2: zeigt in einer Schnittansicht eine zur Vorrichtung der Fig. 1 gehörende Distanzeinrichtung.

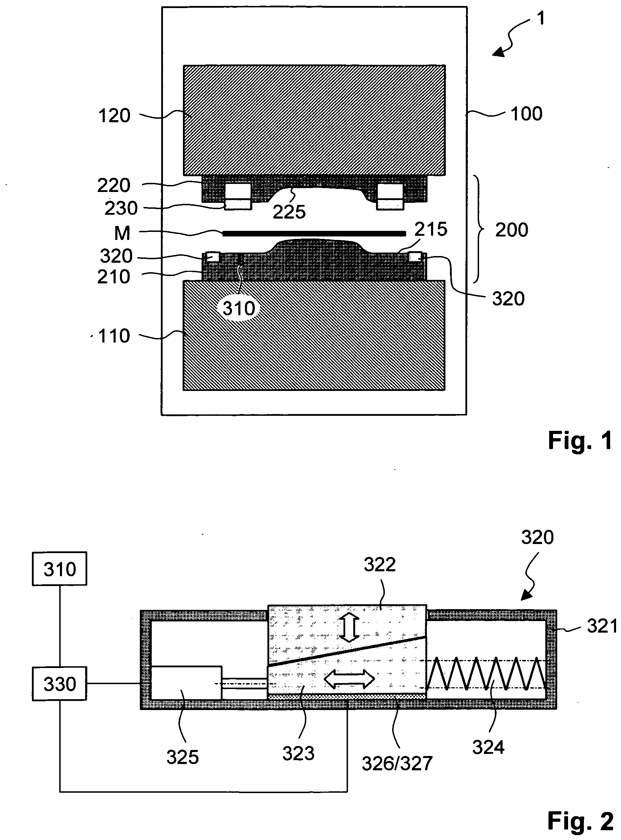

Die in Fig. 1 gezeigte Vorrichtung 1 weist eine nur schematisch angedeutete Presse 100 mit einem Pressentisch 110 und einem vertikal verfahrbaren Pressenstößel 120 auf. Im Arbeitsraum der Presse 100 befindet sich ein Pressenwerkzeug 200 das ein Werkzeugunterteil 210 und ein Werkzeugoberteil 220 aufweist. Das Werkzeugunterteil 210 ist auf dem Pressentisch 110 angeordnet und das Werkzeugoberteil 220 ist am Pressenstößel 120 befestigt. Bei dem Pressenwerkzeug 200 handelt es sich bspw. um ein Blechumformwerkzeug, mit einem beispielhaft im Werkzeugoberteil 220 angeordneten Niederhalter bzw. Blechhalter 230. Durch Absenken des Pressenstößels 120 (Schließhub) kann ein zwischen den Werkzeugteilen 210/220 befindliches Blechwerkstück M umgeformt werden. Die Werkzeugteile 210/220 sind mit entsprechenden Werkzeugwirkflächen 215/225 ausgebildet.

Um bei einem sogenannten Leerhub (Schließhub ohne Blechwerkstück M) eine Kollision der Werkzeugteile 210/220 zu vermeiden und eine Beschädigung der Werkzeugwirkflächen 215/225 zu verhindern weist die Vorrichtung 1 ferner ein aktives Schutzsystem auf, welches mithilfe eines Sensors 310 und einer Steuereinrichtung 330 (siehe Fig. 2) das Vorhandensein bzw. Fehlen eines Blechwerkstücks M erkennt und dann mithilfe mehrerer aktiv einstellbarer Distanzeinrichtungen 320 die Werkzeugteile 210/220 am unteren Totpunkt (UT) der Stößelbewegung so voneinander beabstandet bzw. distanziert, dass zumindest deren Werkzeugwirkflächen 215/225 nicht aneinander stoßen (Wenn-Dann-Funktion).

Die Distanzeinrichtungen 320 sind beispielhaft am Grundkörper des Werkzeugunterteils 210 oder an einer zum Werkzeugunterteil 210 gehörenden starren Komponente angeordnet und wirken direkt gegen den Grundkörper des Werkzeugoberteils 220 oder eine zum Werkzeugoberteil 220 gehörende starre Komponente. Andere Anordnungsmöglichkeiten sind oben beschrieben.

Fig. 2 zeigt eine zum Schutzsystem gehörende Distanzeinrichtung 320. Die Distanzeinrichtung 320 ist als schlagfeste Baueinheit ausgebildet, deren Komponenten verschmutzungsgeschützt in einem Gehäuse 321 oder dergleichen untergebracht sind. Die Distanzeinrichtung 320 weist ein kolbenartiges Druckstück bzw. Stellelement 322 auf, das mithilfe eines Keilschiebers 323 aus- und einfahrbar ist. Die Bewegungen des Keilschiebers 323 werden durch den Keilschiebermechanismus in entsprechende Stellbewegungen des Stellelements 323 umgesetzt. Beim Ein- und Ausfahren des Stellelements 322 bewirkt der Keilschiebermechanismus also eine Kraft- und Bewegungsübersetzung mit Richtungsänderung, wie mit den Doppelpfeilen veranschaulicht. Die Distanzeinrichtung 320 weist ferner ein Federelement 324 auf, das über den Keilschieber 323 das Stellelement 322 in eine ausgefahrene Stellung vorspannt. Die Distanzeinrichtung 320 weist ferner ein doppelwirkendes oder zumindest einfachwirkendes Antriebselement 325 auf, das den Keilschieber 323 in zwei Richtungen aktiv verfahren kann oder das zumindest den Keilschieber 323 entgegen der von dem Federelement 324 erzeugten Federkraft verschieben bzw. zurückschieben kann.

Bei dem Federelement 324 handelt es sich z. B. um eine mechanische Feder oder Gasdruckfeder. Bei dem Antriebselement 325 handelt es sich z. B. um einen elektrischen oder pneumatischen Aktuator (Aktor). Die gezeigte gegenüberliegende Anordnung von Federelement 324 und Antriebselement 325 ist nur beispielhaft. Die Distanzeinrichtung 320 weist ferner Führungen und Bewegungsendanschläge für das Stellelement 322 und für den Keilschieber 323 auf. Die Bezugszeichen 326 und 327 bezeichnen einen Kraftmesssensor zur Erfassung einer auf die Distanzeinrichtung 320 wirkenden Kraft (Druckkraft) und einen Positionsgeber zur Erfassung der Keilschieber- bzw. Stellelementposition. Die Distanzeinrichtung 320 kann mehrere Stellelemente 322, Federeinrichtungen 324 und/oder Antriebselemente 325 aufweisen.

Im störungsfreien Pressenbetrieb sind die Stellelemente 322 der zur Vorrichtung 1 gehörenden Distanzeinrichtungen 320 eingefahren. Sobald der im Pressenwerkzeug 200 verbaute Sensor 310 einen Leerhub ohne Blechwerkstück M erfasst, werden die Stellelemente 322 aktiv durch die Antriebselemente 325 und durch Unterstützung der Federelemente 324 dynamisch ausgefahren und bilden mechanische Anschläge für das Werkzeugoberteil 220, wodurch eine Kollision der Werkzeugteile 210/220 verhindert wird (aktive Schutzfunktion). Die Pressenkräfte werden dann über die Distanzeinrichtungen 320 übertragen und nicht über die Werkzeugwirkflächen 215/225. Die Auswertung des Sensorsignals vom Werkzeugsensor 310 und die Ansteuerung der Antriebselemente 324 wird von der Steuereinrichtung 330 bewerkstelligt. Sobald sich zwischen den Werkzeugteilen 210/220 wieder ein Blechwerkstück M befindet, werden die Stellelemente 322 wieder eingefahren. Die Distanzeinrichtungen 320 können hohe Kräfte bzw. Druckkräfte aufnehmen. Die Keilschiebermechanismen sind selbsthemmend ausgelegt, um das Eindrücken der ausgefahrenen Stellelemente 322 durch das Werkzeugoberteil 220 zu verhindern.

Aufgrund der durch die Federeinrichtungen 324 erzeugten Vorspannungen werden die Stellelemente 322 selbsttätig ausgefahren, sobald die Distanzeinrichtungen 320 von einer Energieversorgung getrennt werden. Dadurch sind die Werkzeugteile 210/220 auch bei fehlender Energieversorgung automatisch kollisionsgeschützt (passive Schutzfunktion).

Bevorzugt sind die aktiv einstellbaren Distanzeinrichtungen 320 derart ausgebildet, dass deren Stellelemente 322 nicht nur zwischen einer eingefahrenen Stellung und einer ausgefahrenen Stellung bewegbar sind, sondern jede beliebige Zwischenstellung bzw. -position definiert einnehmen können. Die Distanzeinrichtungen 320 können somit auch als höhenverstellbare Werkzeugdistanzen verwendet werden, wie obenstehend beschrieben. Die Steuerung oder Regelung kann, auch unter Berücksichtigung der von den Sensoren 326/327 gelieferten Messdaten, von der Steuereinrichtung 330 bewerkstelligt werden.

## Patentansprüche

1. Vorrichtung (1) zur Bearbeitung von Blechwerkstücken (M), mit:
- wenigstens einem Pressenwerkzeug (200), das ein Werkzeugunterteil (210) und ein Werkzeugoberteil (220) aufweist; und
- einer Presse (100), die einen Pressentisch (110), auf dem das Werkzeugunterteil (210) angeordnet ist, und einen Pressenstößel (120), an dem das Werkzeugoberteil (220) befestigt ist, aufweist;
**dadurch gekennzeichnet, dass**
ein aktives Schutzsystem für das Pressenwerkzeug (200) vorgesehen ist, das einen Leerhub erkennt und dann mithilfe wenigstens einer aktiv einstellbaren Distanzeinrichtung (320) eine Kollision zwischen Werkzeugoberteil (220) und Werkzeugunterteil (210) durch mechanisches Beabstanden dieser Werkzeugteile (220, 210) verhindert.

2. Vorrichtung (1) nach Anspruch 1,
**dadurch gekennzeichnet, dass**
die aktiv einstellbare Distanzeinrichtung (320) am Werkzeugoberteil (220) oder am Werkzeugunterteil (210) des Pressenwerkzeugs (200) angeordnet ist.

3. Vorrichtung (1) nach Anspruch 1,
**dadurch gekennzeichnet, dass**
die aktiv einstellbare Distanzeinrichtung (320) am Pressentisch (110) oder Pressenstößel (120) angeordnet ist.

4. Vorrichtung (1) nach einem der vorausgehenden Ansprüche,
**dadurch gekennzeichnet, dass**
das Pressenwerkzeug (200) oder die Presse (100) wenigstens einen Sensor (310) aufweist, der das Vorhandensein eines Blechwerkstücks (M) erfassen kann.

5. Vorrichtung (1) nach einem der vorausgehenden Ansprüche,
**gekennzeichnet durch**
eine zum aktiven Schutzsystem gehörende Steuereinrichtung (330), mit der die aktiv einstellbare Distanzeinrichtung (320) abhängig vom Vorhandensein eines Blechwerkstücks (M) im Pressenwerkzeug (200) gesteuert werden kann.

6. Vorrichtung (1) nach einem der vorausgehenden Ansprüche,
**dadurch gekennzeichnet, dass**
mehrere aktiv einstellbare Distanzeinrichtungen (320) umfasst sind, die einerseits bei einem Leerhub die Kollision zwischen Werkzeugoberteil (220) und Werkzeugunterteil (210) verhindern und andererseits bei einem regulären Arbeitshub als Werkzeugdistanzen fungieren können.

7. Vorrichtung (1) nach einem der vorausgehenden Ansprüche,
**dadurch gekennzeichnet, dass**
die aktiv einstellbare Distanzeinrichtung (320)
- ein Stellelement (322), das aus- und einfahrbar ist;
- wenigstens ein Federelement (324), das das Stellelement (322) in Ausfahrrichtung vorspannt;
- wenigstens ein Antriebselement (325), das das Stellelement (322) gegen die vom Federelement (324) erzeugte Vorspannung bewegen kann;
umfasst.

8. Vorrichtung (1) nach Anspruch 7,
**gekennzeichnet durch**
einen zwischen Antriebselement (325) und Stellelement (322) angeordneten Antriebsmechanismus, wobei dieser Antriebsmechanismus selbsthemmend ausgelegt ist, um das Eindrücken des Stellelements (322) zu verhindern.

9. Vorrichtung (1) nach Anspruch 8,
**dadurch gekennzeichnet, dass**
der Antriebsmechanismus einen Keilschieber (323) umfasst.

10. Vorrichtung (1) nach Anspruch 7, 8 oder 9,
**dadurch gekennzeichnet, dass**
die aktiv einstellbare Distanzeinrichtung (320) wenigstens einen Kraftmesssensor (326) und/oder einen Positionsgeber (327) aufweist.

## Claims

1. Device (1) for processing sheet metal workpieces (M), having:
- at least one pressing tool (200), which has a tool lower part (210) and a tool upper part (220); and
- a press (100) which has a press table (110) on which the tool lower part (210) is arranged, and a press ram (120) to which the tool upper part (220) is fastened;
**characterised in that**
an active protection system is provided for the pressing tool (200) which recognises an idle stroke and then with the aid of at least one actively adjustable distancing device (320) prevents a collision between tool upper part (220) and tool lower part (210) by mechanical distancing of these tool parts (220, 210).

2. Device (1) according to claim 1,
**characterised in that**
the actively adjustable distancing device (320) is arranged on the tool upper part (220) or on the tool lower part (210) of the pressing tool (200).

3. Device (1) according to claim 1,
**characterised in that**
the actively adjustable distancing device (320) is arranged on the press table (110) or press ram (120).

4. Device (1) according to any of the preceding claims,
**characterised in that**
the pressing tool (200) or the press (100) has at least one sensor (310) which can detect the presence of a sheet metal workpiece (M).

5. Device (1) according to any of the preceding claims,
**characterised by**
a control device (330), belonging to the active protection system, with which the actively adjustable distancing device (320) can be controlled depending on the presence of a sheet metal workpiece (M) in the pressing tool (200).

6. Device (1) according to any of the preceding claims,
**characterised in that**
several actively adjustable distancing devices (320) are comprised, which on the one hand prevent the collision between tool upper part (220) and tool lower part (210) in the case of an idle stroke and on the other hand are able to act as tool distances in the case of a regular working stroke.

7. Device (1) according to any of the preceding claims,
**characterised in that**
the actively adjustable distancing device (320) comprises
- an adjusting element (322) which is extendable and retractable;
- at least one spring element (324) which biases the adjusting element (322) in extension direction;
- at least one drive element (325) which is able to move the adjusting element (322) against the bias generated by the spring element (324).

8. Device (1) according to claim 7,
**characterised by**
a drive mechanism arranged between drive element (325) and adjusting element (322), wherein this drive mechanism is designed to be self-inhibiting in order to prevent the pressing-in of the adjusting element (322).

9. Device (1) according to claim 8,
**characterised in that**
the drive mechanism has a wedge gate (323).

10. Device (1) according to claim 7, 8 or 9,
**characterised in that**
the actively adjustable distancing device (320) has at least one force measurement sensor (326) and/or a position sensor (327).

## Revendications

1. Dispositif (1) permettant d'usiner des pièces de tôle (M), avec :
- au moins un outil de presse (200) qui présente une partie inférieure d'outil (210) et une partie supérieure d'outil (220) ; et
- une presse (100) qui présente une table de presse (110) sur laquelle est agencée la partie inférieure d'outil (210) et un coulisseau de presse (120) sur lequel est fixée la partie supérieure d'outil (220) ;
**caractérisé en ce que**,
un système de protection active destiné à l'outil de presse (200) est fourni, qui détecte une course à vide et empêche ensuite, à l'aide d'au moins un dispositif d'espacement à réglage actif (320), une collision entre la partie supérieure d'outil (220) et la partie inférieure d'outil (210) grâce à l'écartement mécanique desdites parties d'outil (220, 210).

2. Dispositif (1) selon la revendication 1,
**caractérisé en ce que**,
le dispositif d'espacement à réglage actif (320) est agencé au niveau de la partie supérieure d'outil (220) ou au niveau de la partie inférieure d'outil (210) de l'outil de presse (200).

3. Dispositif (1) selon la revendication 1,
**caractérisé en ce que,**
le dispositif d'espacement à réglage actif (320) est agencé au niveau de la table de presse (110) ou du coulisseau de presse (120).

4. Dispositif (1) selon l'une quelconque des revendications précédentes,
**caractérisé en ce que,**
l'outil de presse (200) ou la presse (100) présente au moins un capteur (310) qui peut détecter la présence d'une pièce de tôle (M).

5. Dispositif (1) selon l'une quelconque des revendications précédentes,
**caractérisé par**
un dispositif de commande (330) appartenant au système de protection active, au moyen duquel le dispositif d'espacement à réglage actif (320) peut être commandé en fonction de la présence d'une pièce de tôle (M) dans l'outil de presse (200).

6. Dispositif (1) selon l'une quelconque des revendications précédentes,
**caractérisé en ce que,**
il comprend plusieurs dispositifs d'espacement à réglage actif (320) qui, d'une part, empêchent la collision entre la partie supérieure d'outil (220) et la partie inférieure d'outil (210) dans le cas d'une course à vide et, d'autre part, peuvent fonctionner comme des entretoises d'outil dans le cas d'une course de travail normale.

7. Dispositif (1) selon l'une quelconque des revendications précédentes,
**caractérisé en ce que,**
le dispositif d'espacement à réglage actif (320) comprend
- un élément de réglage (322) pouvant être déployé et rétracté ;
- au moins un élément formant ressort (324) qui précontraint l'élément de réglage (322) dans la direction de déploiement ;
- au moins un élément d'entraînement (325) qui peut déplacer l'élément de réglage (322) à l'encontre de la précontrainte générée par l'élément formant ressort (324).

8. Dispositif (1) selon la revendication 7,
**caractérisé par**
un mécanisme d'entraînement agencé entre l'élément d'entraînement (325) et l'élément de réglage (322), dans lequel ledit mécanisme d'entraînement est conçu de manière autobloquante afin d'empêcher l'enfoncement de l'élément de réglage (322).

9. Dispositif (1) selon la revendication 8,
**caractérisé en ce que,**
le mécanisme d'entraînement comprend une coulisse en forme de coin (323).

10. Dispositif (1) selon la revendication 7, 8 ou 9,
**caractérisé en ce que,**
le dispositif d'espacement à réglage actif (320) présente au moins un capteur de force (326) et/ou un capteur de position (327).
